# EUROPÄISCHE PATENTSCHRIFT

(11) **EP 1 484 578 B1**
(45) Veröffentlichungstag und Bekanntmachung des Hinweises auf die Patenterteilung: **24.01.2007**
(21) Anmeldenummer: 04102530.5
(22) Anmeldetag: 04.06.2004
(51) Int. Cl.: G01C 15/00

(54) **Rotationsbaulaser**
Rotational construction laser
Laser rotatif pour la construction

(30) Priorität: 06.06.2003 DE 10325859
(43) Veröffentlichungstag der Anmeldung: 08.12.2004
(73) Patentinhaber: HILTI Aktiengesellschaft, 9494 Schaan (LI)
(72) Erfinder: Kousek, Heinz, 6800, Feldkirch (AT); Ammann, Manfred, 6923, Lauterach (AT); Ammann, Hans-Rudolf, 9000, St. Gallen (CH)
(74) Vertreter: Wildi, Roland

(56) Entgegenhaltungen:
- EP-A- 0 854 351
- US-A- 6 163 373
- PATENT ABSTRACTS OF JAPAN Bd. 0092, Nr. 03 (P-381), 21. August 1985 (1985-08-21) & JP 60 067812 A (TOSHIHIRO TSUMURA; others: 01), 18. April 1985 (1985-04-18)

## Beschreibung

Die Erfindung betrifft einen Rotationsbaulaser mit einem zumindest segmentweise rotierenden Laserstrahl.

Rotationsbaulaser mit einem zumindest segmentweise rotierenden Laserstrahl werden vor allem im Baugewerbe eingesetzt, um auf Wänden, Decken und Böden horizontale, vertikale oder definiert geneigte Ebenen festzulegen.

Nach der DE4406914 weist ein Rotationsbaulaser eine in einem Montagerahmen angeordnete Lasereinheit auf, deren Laserstrahl etwa um 90° von einer Umlenkeinrichtung umlenkbar ist, die in einem Rotationsteil um eine Drehachse drehbar gelagert ist, welche sich mit der Strahlachse des umgelenkten Laserstrahls schneidet, wobei die Rotationsebene in einer dazu senkrechten Schwenkebene beliebig um eine Schwenkachse neigbar ist. Nach der EP854351 ist die Rotationsebene des Laserstrahls in zwei zueinander senkrechten Schwenkebenen neigbar, indem die in einer Kugelkalottenlagerung neigbar im Montagerahmen gelagerte Drehachse mitsamt der Lasereinheit und der Umlenkeinrichtung über zwei Stellantriebe gegenüber dem zumeist horizontal ausgerichteten Gehäuse geneigt wird. Der beim Neigen von der Umlenkeinrichtung beschriebene Bogen des Neigungswinkels führt zu einem affinen Versetzungsfehler der Rotationsebene, die insbesondere bei starken Neigungen eine Nachjustage des Rotationsbaulaser erfordert. Zudem bedingt der vom Bogen des Neigungswinkels beanspruchte Raumbedarf entsprechend grossräumige Gehäuse.

Nach der US6163373 ist bei einem derartigen Rotationsbaulaser die Lasereinheit neigbar über vier trapezförmig angeordnete Gelenkstangen gelagert, wobei deren Verlängerung in der (ungeneigten) Mittelstellung der Lasereinheit durch den Umlenkpunkt des Pentaprismas verläuft. Auch diese Realisierung führt zu einem affinen Versetzungsfehler.

Die Aufgabe der Erfindung besteht in der Realisierung eines Rotationsbaulasers mit einer gegenüber dem Gehäuse neigbaren Rotationsebene ohne Versetzungsfehler beim Neigen dieser. Ein weiterer Aspekt besteht in der Verkleinerung des Gehäuses.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist ein Rotationsbaulaser in einem Gehäuse eine Lasereinheit auf, deren zumindest segmentweise innerhalb einer Rotationsebene rotierender Laserstrahl von einer

Umlenkeinrichtung umgelenkt ist, die in einem Rotationsteil angeordnet sowie um eine Drehachse drehbar gelagert ist, welche sich mit der Strahlachse des umgelenkten Laserstrahls schneidet, wobei die Drehachse in zumindest einer Schwenkebene neigbar in einer Kugelkalottenlagerung in einem gehäusefesten Montagerahmen gelagert ist und die Umlenkeinrichtung im Kugelmittelpunkt einer Kugelkalotte angeordnet ist, die in der Kugelkalottenlagerung gelagert ist.

Durch die Anordnung der Umlenkeinrichtung im Kugelmittelpunkt der Kugelkalotte führt eine Neigung der Rotationsebene stets zu einer Punktdrehung, wodurch ein affiner Versetzungsfehler vermieden wird. Durch die örtlich statische Anordnung der Umlenkeinrichtung entfällt ein vom Bogen des Neigungswinkels bedingter Raumbedarf im Gehäuse, wodurch dieses kleinvolumiger ausgebildet werden kann.

Vorteilhaft ist das Rotationsteil in einem Drehlager eines Statorteils gelagert, das fest mit der Kugelkalotte verbunden ist, wodurch die Rotation der Umlenkeinrichtung um die Drehachse von der Neigung der Drehachse separierbar und das Statorteil insbesondere drehfest zum Montagerahmen festlegbar ist.

Vorteilhaft ist das Statorteil über ein Neigungsführungsmittel führbar am Montagerahmen geführt, wodurch zulässige, gehäusefeste Neigungsebenen festlegbar sind.

Vorteilhaft ist das Neigungsführungsmittel als Führungsstange ausgebildet, die an einer Neigungsführungskontur des Montagerahmens geführt ist, wodurch am Punkt der einseitigen Berührung zusammen mit dem Kugelkalottenmittelpunkt eine Richtung fixiert ist, die zur Fixierung der zulässiger Neigungsebene benutzbar ist, insbesondere mit einer weiteren Führungsstange, welche die Neigungsführungskontur an einem weiteren Punkt einseitig berührt.

Vorteilhaft sind zwei Neigungsführungsmittel vorhanden, die an zwei zueinander rechtwinklig im Montagerahmen angeordneten Neigungsführungskonturen geführt sind, wodurch bei der Neigung eine Zuordnung zu einem gehäusefesten kartesischen Koordinatensystem erhalten bleibt. Zudem bleibt die Ausrichtung von im Statorteil möglicherweise angeordneten Neigungssensoren erhalten.

Vorteilhaft ist das Statorteil über Neigungsstellmittel neigbar mit dem Montagerahmen verbunden, wodurch das Statorteil bezüglich der Neigung zum Gehäuse verstellbar ist.

Vorteilhaft ist das Neigungsstellmittel als Gewindestange ausgebildet, die eine am Montagerahmen gelagerte Stellmutter durchsetzt, wodurch eine feinjustierbare, selbsthemmende Einstellung der Neigung realisiert ist.

Vorteilhaft sind zwei Neigungsstellmittel vorhanden und zueinander rechtwinklig im Montagerahmen angeordnet, wodurch die Drehachse jeweils nur in den beiden zueinander senkrechten Neigungsebenen separiert neigbar ist.

Vorteilhaft ist das Statorteil fest mit einem Elektromotor verbunden, wodurch dieser stets fest zur Drehachse ausgerichtet ist und somit ein einfaches Drehgetriebe ermöglicht.

Die Erfindung wird bezüglich eines vorteilhaften Ausführungsbeispiels näher erläutert mit:
Fig. 1 als Rotationsbaulaser im Längsschnitt, gemäss Ebene I - I der Figur 2;
Fig. 2 als Einzelheit im Querschnitt, geschnitten in Ebene II - II der Fig. 1.

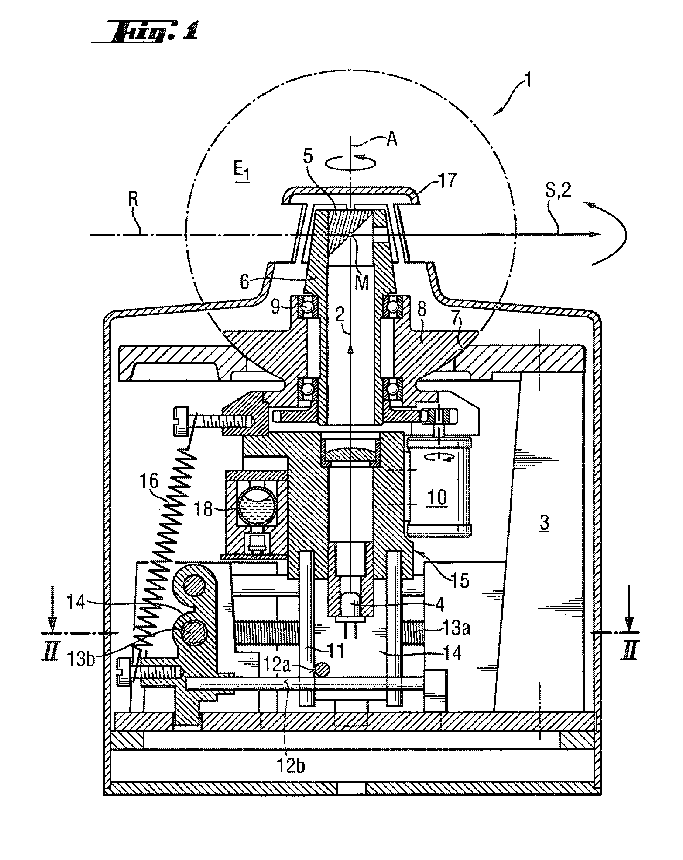

Nach Fig. 1 weist ein Rotationsbaulaser 1 in einem Gehäuse 17 eine Lasereinheit 4 auf, deren Laserstrahl 2 von einer Umlenkeinrichtung 5 in eine, innerhalb einer Rotationsebene R liegende, Strahlachse S umgelenkt ist und segmentweise rotiert. Die Umlenkeinrichtung 5 ist in einem Rotationsteil 6 angeordnet und um eine Drehachse A drehbar gelagert, welche sich mit der Strahlachse S des umgelenkten Laserstrahls 2 in einem Kugelmittelpunkt M schneidet. Die Drehachse A des Rotationsteils 6 ist in einer Kugelkalottenlagerung 7 im gehäusefesten Montagerahmen 3 in einer zur Rotationsebene R senkrechten Schwenkebene E₁ (welche die Darstellungsebene ist) neigbar gelagert, wobei die Umlenkeinrichtung 5 im fiktiven Kugelmittelpunkt M einer Kugelkalotte 8 angeordnet ist, die in der Kugelkalottenlagerung 7 gelagert ist. Das Rotationsteil 6 ist in einem Drehlager 9 eines Statorteils 15 gelagert, das fest mit der Kugelkalotte 8 und mit einem Elektromotor 10 verbunden ist. Das Statorteil 15 mit integrierten Neigungssensoren 18 ist über ein mit diesem fest verbundenen Neigungsführungsmittel 11 an zwei rechtwinklig im Montagerahmen 3 angeordneten Neigungsführungskonturen 12a, 12b jeweils einseitig formschlüssig führbar. Dazu ist das Statorteil 15 über Federmittel 16 gegen die Neigungsführungskonturen 12a, 12b vorgespannt.

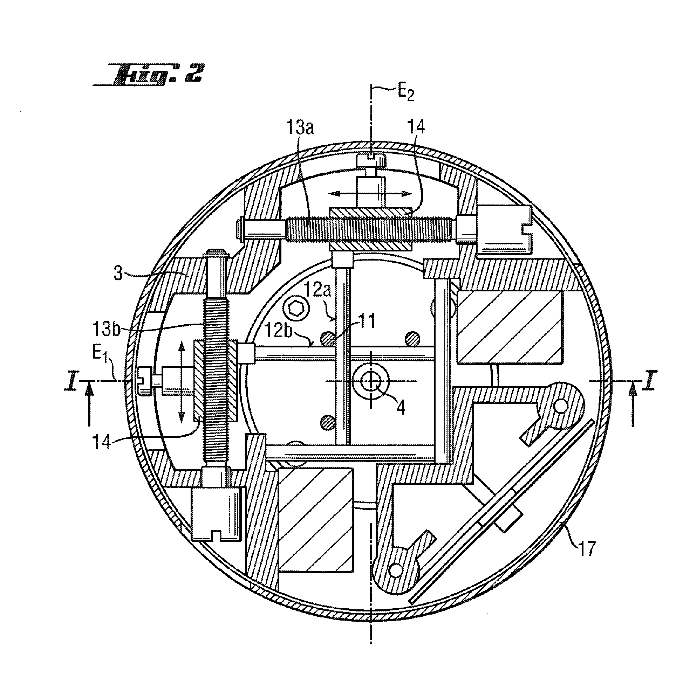

Nach Fig. 2 ist an zwei zueinander rechtwinklig im Montagerahmen 3 angeordneten, schienenförmigen Neigungsführungskonturen 12a, 12b das oberhalb der Darstellungsebene angeordnete Statorteil 15 über drei als Führungsstangen ausgebildete, die Neigungsführungskonturen 12a, 12b an jeweils zwei Punkten berührenden, Neigungsführungsmittel 11 jeweils einseitig formschlüssig führbar. Das somit nur in zwei zueinander senkrechten Ebenen E₁, E₂ neigbare Statorteil 15 ist zudem mit dem Montagerahmen 3 über zwei, zueinander rechtwinklig im Montagerahmen 3 angeordnete Neigungsstellmittel 13a, 13b verbunden, die als Gewindestangen ausgebildet sind und jeweils eine steuerbar angetriebene Stellmutter 14 durchsetzen.

## Patentansprüche

1. Rotationsbaulaser mit einer in einem Gehäuse (17) angeordneten Lasereinheit (4), deren zumindest segmentweise innerhalb einer Rotationsebene (R) rotierender Laserstrahl (2) von einer Umlenkeinrichtung (5) umgelenkt ist, die in einem Rotationsteil (6) angeordnet sowie um eine Drehachse (A) drehbar gelagert ist, welche sich mit der Strahlachse (S) des umgelenkten Laserstrahls (2) schneidet, wobei die Drehachse (A) in zumindest einer Schwenkebene (E₁) neigbar in einer Kugelkalottenlagerung (7) in einem Montagerahmen (3) gelagert ist, **dadurch gekennzeichnet, dass** die Umlenkeinrichtung (5) im Kugelmittelpunkt (M) einer Kugelkalotte (8) angeordnet ist, die in der Kugelkalottenlagerung (7) gelagert ist.

2. Rotationsbaulaser nach Anspruch 1, **dadurch gekennzeichnet, dass** das Rotationsteil (6) in einem Drehlager (9) eines Statorteils (15) gelagert ist, das fest mit der Kugelkalotte (8) verbunden ist.

3. Rotationsbaulaser nach Anspruch 2, **dadurch gekennzeichnet, dass** das Statorteil (15) über ein Neigungsführungsmittel (11) an einer Neigungsführungskontur (12a) des Montagerahmens (3) führbar ist.

4. Rotationsbaulaser nach Anspruch 3, **dadurch gekennzeichnet, dass** das Neigungsführungsmittel (11) als Führungsstange ausgebildet ist.

5. Rotationsbaulaser nach Anspruch 3 oder 4, **dadurch gekennzeichnet, dass** zwei Neigungsführungsmittel (11) vorhanden sind, die an zwei zueinander rechtwinklig im Montagerahmen (3) angeordneten Neigungsführungskonturen (12a, 12b) geführt sind.

6. Rotationsbaulaser nach Anspruch 5, **dadurch gekennzeichnet, dass** das Statorteil (13) über Neigungsstellmittel (13a) neigbar mit dem Montagerahmen (3) verbunden ist.

7. Rotationsbaulaser nach Anspruch 6, **dadurch gekennzeichnet, dass** das Neigungsstellmittel (13a) als Gewindestange ausgebildet ist, die eine am Montagerahmen (3) gelagerte Stellmutter (14) durchsetzt.

8. Rotationsbaulaser nach Anspruch 6 oder 7, **dadurch gekennzeichnet, dass** zwei Neigungsstellmittel (13a, 13b) vorhanden und zueinander rechtwinklig im Montagerahmen (3) angeordnet sind.

9. Rotationsbaulaser nach einem der Ansprüche 2 bis 8, **dadurch gekennzeichnet, dass** das Statorteil (15) fest mit einem Elektromotor (10) verbunden ist.

## Claims

1. A rotary construction laser having, disposed in a housing (17), a laser unit (4) of which the laser beam (2), which rotates at least in segments within a plane of rotation (R), is deflected by a deflection device (5) mounted in a rotary member (6) in such a way as to swivel about an axis of rotation (A), said axis of rotation (A) intersecting the beam axis (S) of the deflected laser beam (2) and being supported, so as to be capable of tilting in at least one swivel plane (E₁), in a universal ball joint bearing (7) disposed in a mounting frame (3), **characterized in that** the deflection device (5) is disposed at the mid-point (M) of a universal ball joint (8) mounted in the universal ball joint bearing (7).

2. A rotary construction laser according to Claim 1, **characterized in that** the rotary member (6) is mounted in a pivot bearing (9) of a stator member (15) which is firmly attached to the universal ball joint (8).

3. A rotary construction laser according to Claim 2, **characterized in that** the stator member (15) can be guided by a tilt guiding device (11) against a tilt guiding profile (12a) of the mounting frame (3).

4. A rotary construction laser according to Claim 3, **characterized in that** the tilt guiding device (11) takes the form of a guide rod.

5. A rotary construction laser according to Claim 3 or 4, **characterized in that** two tilt guiding devices (11) are provided which are guided against two tilt guiding profiles (12a, 12b) which are disposed in the mounting frame (3) so as to extend at right angles to one another.

6. A rotary construction laser according to Claim 5, **characterized in that** the stator member (13) is attached to the mounting frame (3) in such a way that it can be tilted by means of a tilt adjusting device (13a).

7. A rotary construction laser according to Claim 6, **characterized in that** the tilt adjusting device (13a) takes the form of a threaded rod which passes through an adjusting nut (14) fixed to the mounting frame (3).

8. A rotary construction laser according to Claim 6 or 7, **characterized in that** two tilt adjusting devices (13a, 13b) are provided and are supported in the mounting frame (3) so as to extend at right angles to one another.

9. A rotary construction laser according to one of Claims 2 to 8, **characterized in that** the stator member (15) is firmly attached to an electric motor (10).

## Revendications

1. Laser rotatif de bâtiment, comprenant une unité laser (4) qui est disposée dans un boîtier (17) et dont le faisceau laser (2) tournant au moins par segments à l'intérieur d'un plan de rotation (R) est dévié par un dispositif de déviation (5) disposé dans une partie rotative (6) et monté à rotation autour d'un axe de rotation (A) qui coupe l'axe de faisceau (S) du faisceau laser dévié (2), l'axe de rotation (A) étant monté inclinable dans au moins un plan de pivotement (E₁) dans un logement à calotte sphérique (7) ménagé dans un bâti (3), **caractérisé en ce que** le dispositif de déviation (5) est disposé au centre (M) d'une calotte sphérique (8) qui est logée dans le logement à calotte sphérique (7).

2. Laser rotatif de bâtiment selon la revendication 1, **caractérisé en ce que** la partie rotative (6) est logée dans un palier rotatif (9) d'une partie de stator (15) solidarisée à la calotte sphérique (8).

3. Laser rotatif de bâtiment selon la revendication 2, **caractérisé en ce que** la partie de stator (15) est guidée par l'intermédiaire d'un moyen de guidage incliné (11) contre un contour de guidage incliné (12a) du bâti (3).

4. Laser rotatif de bâtiment selon la revendication 3, **caractérisé en ce que** le moyen de guidage incliné (11) est conformé en tige de guidage.

5. Laser rotatif de bâtiment selon la revendication 3 ou 4, **caractérisé en ce qu'**il est prévu deux moyens de guidage incliné (11) qui sont guidés contre deux contours de guidage incliné (12a, 12b) disposés perpendiculairement l'un à l'autre dans le bâti (3).

6. Laser rotatif de bâtiment selon la revendication 5, **caractérisé en ce que** la partie de stator (13) est reliée au bâti (3) de manière inclinable par l'intermédiaire d'un moyen de réglage d'inclinaison (13a).

7. Laser rotatif de bâtiment selon la revendication 6, **caractérisé en ce que** le moyen de réglage d'inclinaison (13a) est conformé en tige filetée qui traverse un écrou de réglage (14) logé dans le bâti (3).

8. Laser rotatif de bâtiment selon la revendication 6 ou 7, **caractérisé en ce que** deux moyens de réglage d'inclinaison (13a, 13b) sont prévus et disposés perpendiculairement l'un à l'autre dans le bâti (3).

9. Laser rotatif de bâtiment selon une des revendications 2 à 8, **caractérisé en ce que** la partie de stator (15) est solidarisée à un moteur électrique (10).
